# EUROPEAN PATENT SPECIFICATION

(11) **EP 1 209 098 B1**
(45) Date of publication and mention of the grant of the patent: **27.04.2005**
(21) Application number: 01309537.7
(22) Date of filing: 12.11.2001
(51) Int. Cl.: B65D 83/00, B05C 17/005

(54) **Cartridge for a reusable dispenser**
Kartusche für wiederverwendbare Abgabevorrichtung
Cartouche pour dispositif distributeur réutilisable

(30) Priority: 21.11.2000 GB 0028306
(43) Date of publication of application: 29.05.2002
(73) Proprietor: Exchem Plc, Alfreton, Derbyshire DE55 7RE (GB)
(72) Inventor: Ewings, Paul Francis Reginald, Ripley, Derbyshire DE5 3JP (GB); Devenport, Paul, Shardlow, Derbyshire DE72 2HF (GB); Cleaver, Matthew, Belper, Derbyshire DE56 1HN (GB)
(74) Representative: Gordon, Naoise Padhraic Edward

(56) References cited:
- EP-A- 0 422 698
- EP-A- 0 754 633
- US-A- 5 356 037
- US-A- 5 993 720

## Description

This invention relates to a cartridge according to the preamble of claim 1, used in reusable dispensing devices, such as caulking guns, for dispensing an extrudable material, such as a sealant, filler or two-part composition, through a nozzle provided at one end of the cartridge. In particular, the invention relates to rigid cartridges in which the material to be dispensed is provided in a flexible membrane of a bag-like form which is located inside the rigid cartridge.

EPO 754 633 discloses a known cartridge for dispensing a multi-component composition, of the type known as "CIC" (capsule in cartridge). A flexible plastic bag having two or more compartments, each containing a reactive component of a multi-component composition, is placed inside a rigid tubular cartridge. The bag extends at one end through a nozzle adapter and is sealed by a staple.

The bag remains sealed until the material is to be dispensed, when the user cuts the bag adjacent to the staple and fits a nozzle to the nozzle adapter. A piston attached to the dispensing gun is slidable within the tube, and upon operation of the gun the piston acts as a driver on the bag and the material in it, forcing the material from the bag and through the nozzle in an extruded form. The rigid tubular cartridge and piston are both circular in cross-section.

In other prior art cartridges which do not use a separate bag within the rigid cartridge tube, the piston serves to seal against the inner surface of the cartridge tube, thereby preventing the escape of material between the piston and the tube and forcing all the material to exit the cartridge through the nozzle. In the cartridge of EP 0 754 633 the piston does not serve this sealing function, but the tube and piston remain of circular cross-section, thereby limiting the volume of material in the cartridge.

In it an object of the present invention to provide a cartridge of the sort having a flexible bag provided within a rigid cylinder which may be used with standard cartridge guns but which offers an increased volume of material compared to the prior art cartridges.

According to the present invention there is provided a cartridge for use with a dispensing gun, the cartridge comprising:
an external rigid tube having a first end, a second end and a uniform first portion of substantially uniform cross-section;
a nozzle connector at the first end of the rigid tube;
a internal frangible tube containing material to be dispensed; and
a piston slidably mounted within the uniform portion of the rigid tube and adapted to urge the material towards the nozzle connector in use,
wherein the uniform portion of the rigid tube has an internal cross-sectional area which is greater than that of an internal circle having a maximum diameter equal to the maximum internal width of the first portion.

Preferably, the frangible tube extends into the nozzle connector.

Preferably, the frangible tube has an uncompressed perimeter greater than or equal to the perimeter of the rigid tube. Preferably, the frangible tube is only partly filled with material to be dispensed.

Preferably, the uniform portion has a substantially square cross-section. Alternatively, the uniform portion may have a cross-sectional shape equivalent to a semi-circle connected to rectangle having a side of length equal to the diameter of the semi-circle.

Preferably, the uniform portion has a polygonal cross-sectional shape comprising at least one straight side. Preferably, the polygonal shape has at least one internal angle of 90 degrees or more.

Preferably, the external rigid tube has a transition portion between the uniform portion and the nozzle connector. Preferably, the transition portion has a circular external cross-sectional shape adapted to fit within a standard cartridge gun.

Preferably, the piston has a cross-sectional shape substantially equal to the internal cross-sectional shape of the uniform portion of the rigid tube. Preferably, the piston is provided with a circular depression on the face of the piston remote from the internal frangible tube, the circular depression being adapted to cooperate with the circular piston engaging means of a standard cartridge gun.

Preferably, the face of the piston adjacent to the internal frangible tube is provided with projecting portion adapted to slidably engage with the transition portion of the external rigid tube.

Preferably, the internal frangible tube is provided with a plurality of compartments, each compartment housing a component of a multi-component composition.

Preferably, the nozzle connector is provided with an externally threaded portion to facilitate attachment of a nozzle or static mixer.

The invention therefore provides a cartridge for use with a dispensing gun, the cartridge comprising:
an external rigid tube having a first end, a second end and a uniform first portion of substantially uniform cross-section;
a nozzle connector at the first end of the rigid tube;
a internal frangible tube containing material to be dispensed; and
a piston slidably mounted within the uniform portion of the rigid tube and adapted to urge the material towards the nozzle connector in use,
wherein the uniform portion of the rigid tube has an internal cross-sectional area which is greater than that of a circle having a diameter equal to the maximum internal width of the first portion.

The internal circle is defined with reference to the first portion and is a circle that can be contained within the dimensions of the uniform portion i.e. can have a maximum diameter equal to the maximum internal width of the uniform portion provided that the circle is an internal circle. For example, in the case of a uniform portion have a rectangular shape the diameter could be equal to the width of the minor axis of the rectangle.

Embodiments of the invention will now be described, by way of example only, with reference to the accompanying drawings, in which:
Fig 1 is a cross-section through a cartridge according to the invention;
Fig 2 is a side elevation of the cartridge of Fig 1;
Fig 3 is a cross-section on line III-III through the cartridge of Fig 2;
Fig 4 is a cross-section on line IV-IV through the cartridge of Fig 2;
Fig 5 is a cross-section in a position equivalent to that of Fig 3, but through another cartridge according to the invention; and
Fig 6 is a perspective view of a piston of yet another cartridge according to the invention.

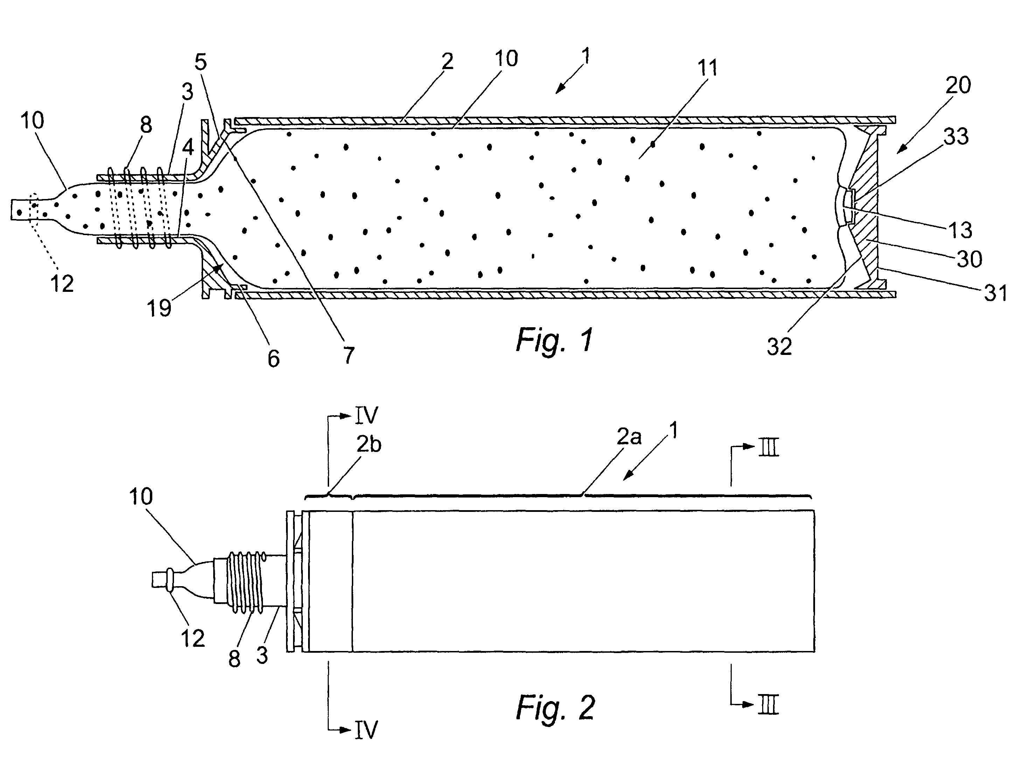

Referring to Fig 1, a cartridge 1 includes an external rigid tube 2 which has at its first end a nozzle connector 3. The nozzle connector 3 has a central internal bore 4 and a shoulder portion 5 which is rigidly secured to the rigid tube 2 at connecting flange 6. The shoulder portion 5 has a conical interior surface 7 which aids the flow of dispensed material from the large diameter rigid tube 2 to the small diameter bore 4. The exterior of the nozzle connector 3 is provided with a male thread 8, which is adapted to engage with the internal thread of a nozzle (not shown) or, in the case of a multi-component composition, a commercially available static mixer (not shown). It is to be understood that the invention is not limited to threaded nozzle connectors, and other means of connecting a nozzle or mixer may be used.

An internal frangible tube 10 containing the material 11 to be dispensed is located within the external rigid tube 2. The internal tube 10 is made from a flexible pliable material compatible with the material 11 to be stored therein. In appearance it resembles a bag or skin. The frangible tube 10 is filled with the material 11 to be dispensed in a known manner. In the example of Fig 1 the frangible tube 10 is supplied as a continuous tube and is cut to length and sealed by clips 12 and 13 at each end. The frangible tube 10 is not filled to its capacity, so that it can be inserted in the rigid tube 2 and one end of the frangible tube drawn through the bore 4 within the nozzle connector 3. The internal tube 10 may be made and filled by any other suitable means, and the invention is not limited to filling a continuous tube. For example, the tube may be made by folding and sealing one or more sheets to form one or more compartments and filling the compartment(s).

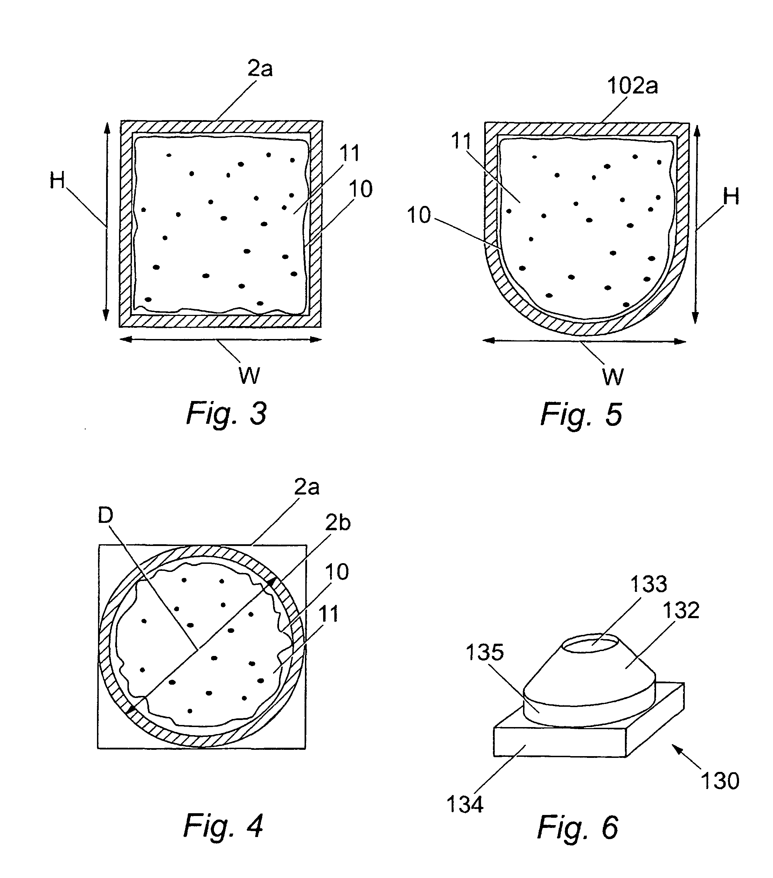

The external rigid tube 2 has a uniform portion 2a extending over most of its length and a transition portion 2b extending over the remainder of its length. The transition portion 2b is circular in cross-section, as shown in Fig 4. The size and shape of the transition portion 2b is selected so that the cartridge 1 fits in the standard circular tubular sleeve of a dispensing gun (not shown). In the example illustrated in Fig 3, the uniform portion 2a has a square cross-sectional shape. The width W and the height H of the external cross-section are both equal to the diameter D of the transition portion 2b. Accordingly, the volume of unit length of the uniform portion 2a is 27% greater than the volume per unit length of the circular transition portion 2b, with the result that the cartridge 1 according to the invention can hold at least 20% more material 11 than a standard circular cylindrical cartridge of the same external dimensions and length, when allowance is made for the reduced cross-sectional area of the transition portion 2b.

The square cross-section of Fig 3 is appropriate for use with a dispensing gun having an open frame. However, some known semi-closed dispensing guns have an arcuate channel extending along the length of the gun, the radius of the channel being such that a standard circular cylindrical cartridge rests snugly in the channel. It is not possible to use a cartridge having a square cross-section with such a gun. Fig 5 shows the cross-section through the uniform portion 102a of a cartridge 1 which can be used with such a semi-closed dispensing gun. The shape of the piston is of the same shape as the uniform portion 102a, but in other respects the cartridge is similar to that shown in Figs 1, 2 and 4. The cross-sectional shape comprises a semi-circle of diameter D in conjunction with a rectangle of width D and height D/2. Thus the maximum width W and height H of the uniform portion 102a are both equal to the diameter D of the transition portion 2b. In the example of Fig 5 an increase in internal cross-sectional area of 13% is achieved, such that the cartridge can hold at least 10% more material 11 than a standard circular cylindrical cartridge of the same external dimensions and length, when allowance is made for the reduced cross-sectional area of the transition portion 2b.

At the open end 20 of the external rigid tube 2 is a piston 30 which is slidably mounted within the uniform portion 2a, 102a of the rigid tube. The piston 30 has substantially the same cross-sectional shape as the cross-sectional shape of the uniform portion 2a,102a of the rigid tube 2. On the outer face of the piston 30 is a circular depression 31 whose size is selected so as to fit with the circular bearing member of a standard dispensing gun (not shown). The inner surface 32 of the piston 30 is substantially conical in shape, to match the conical surface 7 of the nozzle connector 3 at the first end 19 of the rigid tube 2. When all the material 11 is dispensed from the cartridge 1, the conical surfaces 32 and 7 are in substantial contact, ensuring that there is minimal wastage of material 11 left in the cartridge 1.

The fact that the material 11 is provided in a separate bag 30 means that the piston does not serve a sealing function. This enables the piston 30 to be provided in non-circular shapes, in contrast to prior art cartridges in which the material is directly held in a rigid tube and the piston serves to seal between the interior walls of the tube and the piston, to prevent the passage of material between the piston and the tube walls.

Fig 6 shows an alternative embodiment of a piston 130 suitable for use in the cartridge whose uniform cross-section is illustrated in Fig 3. The piston comprises a base portion 134 of square cross-section adapted to fit within the square uniform portion 2a of the rigid tube 2. On the inner surface of the base portion 134 is provided a circular cylindrical portion 135 adapted to fit within the transition portion 2b of the rigid tube 2. A conical surface 132 then extends from the circular cylindrical portion 135. The conical surface 132 is intended to engage with the interior conical surface 7 of the nozzle connector 3, as described above. A recess 133 is provided to engage with the clip 13 at the end of the internal frangible tube 10. It is to be understood that the base portion 134 of the piston 130 may instead have a cross-sectional shape adapted to fit within the uniform portion 102a of the rigid tube illustrated in Fig 5, or within a uniform portion of any other shape falling within the scope of the invention.

The invention thus provides a cartridge for a gun dispenser which holds more material than a conventional circular cylindrical cartridge and which may be used with single component compositions as well as multi-component compositions. When the cartridges are used with multi-component compositions, the internal frangible tube 10 includes two or more compartments (not shown), each containing a respective component. The components are held separate until dispensing through the nozzle and mixing in a static mixer (not shown). Because the external dimensions of the cartridge are no bigger than conventional cartridges, they may be efficiently boxed for storage and delivery.

It is to be understood that the invention encompasses cartridges having a uniform portion of any suitable cross-sectional shape, provided that the cross-sectional area is greater than that of a circle having the same maximum linear dimensions. In practice it has been found that a square cross-section offers significant advantages, since the volume is maximised and the square tube is easy to collapse after use. Collapsing after use for the purposes of disposal may be made easier if diametrically opposed corners of the tube 2 are weakened by having a reduced thickness.

## Claims

1. A cartridge (1) for use with a dispensing gun, the cartridge (1) comprising:
an external rigid tube (2) having a first end, a second end and a uniform first portion (2a, 102a) of uniform cross-section;
a nozzle connector (3) at the first end of the rigid tube (2);
an internal frangible tube (10) containing material (11) to be dispensed; and
a piston (30) slidably mounted within the uniform portion (2a) of the rigid tube (2) and adapted to urge the material (11) towards the nozzle connector (3) in use, **characterized in that**
the uniform portion (2a, 102a) of the rigid tube (2) has an internal cross-sectional area which is greater than that of an internal circle having a maximum diameter equal to the maximum internal width of the first portion (2a, 102a).

2. A cartridge (1) as claimed in Claim 1 **characterised in that** the frangible tube (10) extends into the nozzle connector (3).

3. A cartridge (1) as claimed in Claim 1 or Claim 2 **characterised in that** the frangible tube (10) has an uncompressed perimeter greater than or equal to the perimeter of the rigid tube (2).

4. A cartridge (1) as claimed in any of Claims 1 to 3 **characterised in that** the frangible tube (10) is only partly filled with material (11) to be dispensed.

5. A cartridge (1) as claimed in any of Claims 1 to 4 **characterised in that** the uniform portion (2a, 102a) has a square cross-section.

6. A cartridge (1) as claimed in any of Claims 1 to 4 **characterised in that** the uniform portion (2a, 102a) may have a cross-sectional shape equivalent to a semi-circle connected to a rectangle having a side of length equal to the diameter of the semi-circle.

7. A cartridge (1) as claimed in any of Claims 1 to 4 **characterised in that** the uniform portion (2a, 102a) has a polygonal cross-sectional shape comprising at least one straight side.

8. A cartridge (1) as claimed in Claim 7 **characterised in that** the polygonal shape has at least one internal angle of 90 degrees or more.

9. A cartridge (1) as claimed in any of Claims 1 to 8 **characterised in that** the external rigid tube (2) has a transition portion (2b) between the uniform portion (2a, 102a) and the nozzle connector (3).

10. A cartridge (1) as claimed in Claim 9 **characterised in that** the transition portion (2b) has a circular external cross-sectional shape adapted to fit within a standard cartridge gun.

11. A cartridge (1) as claimed in any of Claims 1 to 10 **characterised in that** the piston (30) has a cross-sectional shape substantially equal to the internal cross-sectional shape of the uniform portion (2a, 102a) of the rigid tube (2).

12. A cartridge (1) as claimed in any of Claims 1 to 11 **characterised in that** the piston (30) is provided with a circular depression (31) on the face of the piston (30) remote from the internal frangible tube (10), the circular depression (31) being adapted to cooperate with the circular piston engaging means of a standard cartridge gun.

13. A cartridge as claimed in any of Claims 9 to 12 **characterised in that** the face of the piston (30) adjacent to the internal frangible tube (10) is provided with a projecting portion (132) adapted to slidably engage with the transition portion (2b) of the external rigid tube (2).

14. A cartridge as claimed in any of Claims 1 to 13 **characterised in that** the internal frangible tube (10) is provided with a plurality of compartments, each compartment housing a component of a multi-component composition.

15. A cartridge (1) as claimed in any of Claims 1 to 14 **characterised in that** the nozzle connector (3) is provided with an externally threaded portion to facilitate attachment of a nozzle or static mixer.

## Patentansprüche

1. Eine Kartusche (1) zur Verwendung mit einer Spenderpistole, wobei die Kartusche (1) Folgendes beinhaltet:
ein äußeres steifes Rohr (2), das ein erstes Ende, ein zweites Ende und einen einheitlichen ersten Abschnitt (2a, 102a) mit einheitlichem Querschnitt aufweist;
ein Düsenverbindungsstück (3) an dem ersten Ende des steifen Rohrs (2);
ein inneres zerbrechliches Rohr (10) das ein zu spendendes Material (11) enthält; und
einen Kolben (30), der innerhalb des einheitlichen Abschnitts (2a) des steifen Rohrs (2) gleitbar montiert ist und angepasst ist, um im Einsatz das Material (11) in Richtung des Düsenverbindungsstücks (3) zu treiben, **dadurch gekennzeichnet, dass**
der einheitliche Abschnitt (2a, 102a) des steifen Rohrs (2) einen inneren Querschnittsbereich aufweist, der größer ist, als der eines inneren Kreises, der einen maximalen Durchmesser aufweist, der der maximalen inneren Breite des ersten Abschnitts (2a, 102a) gleich ist.

2. Kartusche (1) gemäß Anspruch 1, **dadurch gekennzeichnet, dass** sich das zerbrechliche Rohr (10) in das Düsenverbindungsstück (3) erstreckt.

3. Kartusche (1) gemäß Anspruch 1 oder Anspruch 2, **dadurch gekennzeichnet, dass** das zerbrechliche Rohr (10) einen dekomprimierten Umfang aufweist, der größer oder gleich dem Umfang des steifen Rohrs (2) ist.

4. Kartusche (1) gemäß einem der Ansprüche 1 bis 3, **dadurch gekennzeichnet, dass** das zerbrechliche Rohr (10) nur teilweise mit zu spendendem Material (11) gefüllt ist.

5. Kartusche (1) gemäß einem der Ansprüche 1 bis 4, **dadurch gekennzeichnet, dass** der einheitliche Abschnitt (2a, 102a) einen quadratischen Querschnitt aufweist.

6. Kartusche (1) gemäß einem der Ansprüche 1 bis 4, **dadurch gekennzeichnet, dass** der einheitliche Abschnitt (2a, 102a) eine Querschnittsform aufweisen kann, die einem Halbkreis entspricht, der mit einem Rechteck verbunden ist, das eine Seite mit einer Länge aufweist, die dem Durchmesser des Halbkreises gleich ist.

7. Kartusche (1) gemäß einem der Ansprüche 1 bis 4, **dadurch gekennzeichnet, dass** der einheitliche Abschnitt (2a, 102a) eine vieleckige Querschnittsform, die mindestens eine gerade Seite beinhaltet, aufweist.

8. Kartusche (1) gemäß Anspruch 7, **dadurch gekennzeichnet, dass** die vieleckige Form mindestens einen Innenwinkel von 90 Grad oder mehr aufweist.

9. Kartusche (1) gemäß einem der Ansprüche 1 bis 8, **dadurch gekennzeichnet, dass** das äußere steife Rohr (2) einen Übergangsabschnitt (2b) zwischen dem einheitlichen Abschnitt (2a, 102a) und dem Düsenverbindungsstück (3) aufweist.

10. Kartusche (1) gemäß Anspruch 9, **dadurch gekennzeichnet, dass** der Übergangsabschnitt (2b) eine kreisförmige äußere Querschnittsform aufweist, die angepasst ist, um in eine Standard-Kartuschenpistole zu passen.

11. Kartusche (1) gemäß einem der Ansprüche 1 bis 10, **dadurch gekennzeichnet, dass** der Kolben (30) eine Querschnittsform aufweist, die der inneren Querschnittsform des einheitlichen Abschnitts (2a, 102a) des steifen Rohrs (2) im Wesentlichen gleich ist.

12. Kartusche (1) gemäß einem der Ansprüche 1 bis 11, **dadurch gekennzeichnet, dass** der Kolben (30) auf der Fläche des Kolbens (30), entfernt von dem inneren zerbrechlichen Rohr (10), mit einer kreisförmigen Vertiefung (31) versehen ist, wobei die kreisförmige Vertiefung (31) angepasst ist, um mit dem kreisförmigen Kolbeneingriffsmittel einer Standard-Kartuschenpistole zusammenzuwirken.

13. Kartusche gemäß einem der Ansprüche 9 bis 12, **dadurch gekennzeichnet, dass** die Fläche des Kolbens (30), die sich anliegend an dem inneren zerbrechlichen Rohr (10) befindet, mit einem vorstehenden Abschnitt (132) versehen ist, der angepasst ist, um in den Übergangsabschnitt (2b) des äußeren steifen Rohrs (2) gleitbar einzugreifen.

14. Kartusche gemäß einem der Ansprüche 1 bis 13, **dadurch gekennzeichnet, dass** das innere zerbrechliche Rohr (10) mit einer Vielzahl von Abteilungen versehen ist, wobei jede Abteilung eine Komponente mit einer Mehrkomponenten-Zusammensetzung unterbringt.

15. Kartusche (1) gemäß einem der Ansprüche 1 bis 14, **dadurch gekennzeichnet, dass** das Düsenverbindungsstück (3) mit einem Außengewindeabschnitt versehen ist, um das Anbringen einer Düse oder eines statischen Mischers zu erleichtern.

## Revendications

1. Une cartouche (1 ) destinée à être utilisée avec un pistolet de distribution, la cartouche (1) comportant :
un tube rigide externe (2) ayant une première extrémité, une deuxième extrémité et une première portion uniforme (2a, 102a) de coupe transversale uniforme ;
un connecteur de buse (3) à la première extrémité du tube rigide (2) ;
un tube cassable interne (10) contenant un matériau (11) devant être distribué ; et
un piston (30) monté de façon à pouvoir coulisser à l'intérieur de la portion uniforme (2a) du tube rigide (2) et adapté pour pousser le matériau (11) en direction du connecteur de buse (3) lors de l'utilisation, **caractérisée en ce que**
la portion uniforme (2a, 102a) du tube rigide (2) a une superficie en coupe transversale interne qui est supérieure à celle d'un cercle interne ayant un diamètre maximum égal à la largeur interne maximum de la première portion (2a, 102a).

2. Une cartouche (1) telle que revendiquée dans la revendication 1 **caractérisée en ce que** le tube cassable (10) se prolonge jusque dans le connecteur de buse (3).

3. Une cartouche (1) telle que revendiquée dans la revendication 1 ou dans la revendication 2 **caractérisée en ce que** le tube cassable (10) a un périmètre non-comprimé supérieur ou égal au périmètre du tube rigide (2).

4. Une cartouche (1) telle que revendiquée dans n'importe lesquelles des revendications 1 à 3 **caractérisée en ce que** le tube cassable (10) est seulement partiellement rempli du matériau (11) devant être distribué.

5. Une cartouche (1) telle que revendiquée dans n'importe lesquelles des revendications 1 à 4 **caractérisée en ce que** la portion uniforme (2a, 102a) a une coupe transversale carrée.

6. Une cartouche (1) telle que revendiquée dans n'importe lesquelles des revendications 1 à 4 **caractérisée en ce que** la portion uniforme (2a, 102a) peut avoir une configuration en coupe transversale équivalente à un demi-cercle raccordé à un rectangle ayant un côté de longueur égale au diamètre du demi-cercle.

7. Une cartouche (1) telle que revendiquée dans n'importe lesquelles des revendications 1 à 4 **caractérisée en ce que** la portion uniforme (2a, 102a) a une configuration en coupe transversale polygonale comportant au moins un côté droit.

8. Une cartouche (1) telle que revendiquée dans la revendication 7 **caractérisée en ce que** la configuration polygonale a au moins un angle interne de 90 degrés ou plus.

9. Une cartouche (1) telle que revendiquée dans n'importe lesquelles des revendications 1 à 8 **caractérisée en ce que** le tube rigide externe (2) a une portion de transition (2b) entre la portion uniforme (2a, 102a) et le connecteur de buse (3).

10. Une cartouche (1) telle que revendiquée dans la revendication 9 **caractérisée en ce que** la portion de transition (2b) a une configuration en coupe transversale externe circulaire adaptée pour s'emboîter à l'intérieur d'un pistolet à cartouche standard.

11. Une cartouche (1) telle que revendiquée dans n'importe lesquelles des revendications 1 à 10 **caractérisée en ce que** le piston (30) a une configuration en coupe transversale substantiellement égaie à la configuration en coupe transversale interne de la portion uniforme (2a, 102a) du tube rigide (2).

12. Une cartouche (1) telle que revendiquée dans n'importe lesquelles des revendications 1 à 11 **caractérisée en ce que** le piston (30) est muni d'un creux circulaire (31) sur la face du piston (30) éloignée du tube cassable interne (10), le creux circulaire (31) étant adapté pour coopérer avec le moyen d'engagement de piston circulaire d'un pistolet à cartouche standard.

13. Une cartouche telle que revendiquée dans n'importe lesquelles des revendications 9 à 12 **caractérisée en ce que** la face du piston (30) adjacente au tube cassable interne (10) est munie d'une portion faisant saillie (132) adaptée pour se mettre en prise de façon à pouvoir coulisser avec la portion de transition (2b) du tube rigide externe (2).

14. Une cartouche telle que revendiquée dans n'importe lesquelles des revendications 1 à 13 **caractérisée en ce que** le tube cassable interne (10) est muni d'une pluralité de compartiments, chaque compartiment accueillant un composant d'une composition à composants multiples.

15. Une cartouche (1) telle que revendiquée dans n'importe lesquelles des revendications 1 à 14 **caractérisée en ce que** le connecteur de buse (3) est muni d'une portion filetée de façon externe pour faciliter l'attache d'une buse ou d'un mélangeur statique.
